# EUROPÄISCHE PATENTANMELDUNG

(11) **EP 2 392 441 A2**
(43) Veröffentlichungstag der Anmeldung: **07.12.2011**
(21) Anmeldenummer: 11167048.5
(22) Anmeldetag: 23.05.2011
(51) Int. Cl.: B28C 9/00, B28C 7/04, B28C 7/12, B28C 7/14, C04B 40/00

(54) **System zum Aufbereiten und Aufbringen von erstarrungsfähigem Baumaterial sowie hierfür geeignete Zugabeeinrichtung**

(30) Priorität: 07.06.2010 DE 202010005572 U
(71) Anmelder: Fixit Trockenmörtel Holding AG, 6342 Baar (CH)
(72) Erfinder: Schubert, Volker, 04442 Zwenkau (DE)
(74) Vertreter: Kuhnen & Wacker

(57) **Zusammenfassung**

Die vorliegende Erfindung betrifft ein System zum Aufbereiten und Aufbringen von erstarrungsfähigem Baumaterial, aufweisend: eine Verarbeitungseinrichtung (1) mit einer ersten Zuführöffnung (3) und einer zweiten Zuführöffnung (5), zur Aufnahme erster und zweiter Ausgangsstoffe für das erstarrungsfähige Baumaterial, mindestens eine erste Zuführvorrichtung (7), zum Zuführen des ersten Ausgangsstoffes zu der Verarbeitungseinrichtung (1), und eine zweite Zuführvorrichtung (9), zum Zuführen des zweiten Ausgangsstoffes zu der Verarbeitungseinrichtung (1). Die Verarbeitungseinrichtung (1) weist ferner eine ein- oder mehrstufige Mischeinheit (11) zum Verarbeiten der zugeführten ersten und zweiten Ausgangsstoffe zu dem erstarrungsfähigen Baumaterial, sowie eine Ausgabeeinheit (13), zur Ausgabe des erstarrungsfähigen Baumaterials über eine Abgabeöffnung (15), auf. Zwischen der zweiten Zuführvorrichtung (9) und der zweiten Zuführöffnung (5) der Verarbeitungseinrichtung (1) ist eine Zugabeeinrichtung (17) angeordnet, zur Zugabe eines zusätzlichen Mittels in den zweiten Ausgangsstoff. Hierzu umfasst die Zugabeeinrichtung (17) einen Regler (31), zur Einstellung einer Zugabemenge des zusätzlichen Mittels in den zweiten Ausgangsstoff. Ein weiterer Aspekt der Erfindung betrifft eine hierfür geeignete derartige Zugabeeinrichtung (17).

## Beschreibung

### Technisches Gebiet

Die vorliegende Erfindung betrifft ein System zum Aufbereiten und Aufbringen von erstarrungsfähigem Baumaterial nach Anspruch 1. Ein weiterer Aspekt der Erfindung betrifft eine hierfür geeignete Zugabeeinrichtung nach Anspruch 22.

### Stand der Technik

Herkömmlich werden auf Rohbauten oder auch bei Renovierungsarbeiten, bei denen Gebäudefassaden neu verputzt werden müssen, die hierfür benötigten Putz- bzw. Mörtelschichten in mehreren Lagen aufgebracht, um die gewünschte Dicke und Ausgestaltung zu erreichen.

So kann es beispielsweise zunächst erforderlich sein, dass ein Ausgleichsputz auf die Rohbau-Fassade aufgetragen wird, der anschließend mit einem Deckputz, beispielsweise einem Struktur- oder Farbputz abgedeckt werden soll.

Je nach Beschaffenheit der zu verputzenden Fläche kann dabei schon die Putz- bzw. Mörtelschicht für den Ausgleichsputz mehrere Zentimeter dick werden.

In jüngerer Zeit wird bei der Verkleidung von Außenfassaden auch immer mehr Rücksicht auf die Wärmedämmung genommen. So werden dabei, insbesondere unter Beachtung der Energieeinsparverordnung (EnEV), zunächst Wärmedämmplatten oder dergleichen an der Außenfassade angebracht, die dann mit einer Grundschicht sowie einer Deckschicht verputzt werden.

Die einzelnen Putzschichten müssen dabei, je nach ihrer Zusammensetzung aus Bindemitteln, Gips, Kalk, Zement, etc., eine bestimmte Zeit erstarren bzw. antrocknen, um eine ausreichende Anhaftung an der zu verputzenden Fläche zu erzielen, und um gleichzeitig sicherzustellen, dass die nächste aufzubringende Putzschicht an dieser ersten Lage zuverlässige anhaften kann.

Hierfür muss man bisher mehrere Arbeitsgänge einplanen, was unter Berücksichtigung der jeweiligen Erstarrungszeiten der einzelnen Schichten eine Bearbeitungszeit von bis zu mehreren Wochen erforderlich machen kann.

Dies ist insbesondere deshalb von Nachteil, weil hierdurch eine Verzögerung auf der Baustelle entsteht. Zudem kann es vorkommen, dass, bei ungünstigen Platzverhältnissen und/oder beengter Straßenführung zum Teil ganze Straßenabschnitte gesperrt werden müssen, um die benötigten Maschinen und Gerätschaften aufzustellen. Dies kann zu unerwünschten Verkehrsbehinderungen führen.

Zur zur Verkürzung der Abbindezeit der aufzubringenden Putzschichten wurde daher vorgeschlagen, Abbindebeschleuniger dem Putz beizumengen.

Dies erfolgt dabei, je nach Baustelle, durch manuelles Hinzuschütten eines Abbindebeschleunigers in eine Mischmaschine, der dann mit dem darin gemischten Putz vermengt wird.

Eine andere Technik sieht vor, dass der Abbindebeschleuniger vermittels einer separaten Zuführvorrichtung automatisch der Mischmaschine zugeführt wird. Diese separate Zuführvorrichtung wird dabei in der Regel von einem eigenen, elektrisch betriebenen Motor angetrieben und gibt den Abbindebeschleuniger dem bereits angemischten Putz zu.

Gemäß einer in der DE 10 2005 015 841 A1 diskutierten Vorrichtung kann der Abbindebeschleuniger über eine separat bereitgestellte Zuführvorrichtung dem der Putzmaschine bzw. der Mischmaschine zugeführten Wasser beigemengt werden, Hierbei ist die Zuführvorrichtung in einer Bypassleitung vorgesehen, die über zwei Verzweigungsstellen mit der Hauptleitung verbunden werden kann

Überdies kann es manchmal vorkommen, dass ein zu schnelles Abbinden verhindert werden soll, wozu der Putzmischung ein Abbindeverzögerer beigemengt wird, um die Abbinde- bzw. Erstarrungszeit weiter hinauszuzögern.

Gleichwohl zeigen diese aus dem Stand der Technik bekannten Lösungen den Nachteil, dass die exakte Menge des zugeführten Abbindebeschleunigers und/oder des Abbindeverzögerers nicht einstellbar ist. Insbesondere bleibt dabei nämlich das Verhältnis des der Mischmaschine zugeführten Wasser zu der zugegebenen Menge an Abbindebeschleuniger und/oder Abbindeverzögerer unberücksichtigt.

Auch ist es mit derartigen Lösungen nicht möglich, das Erstarrungs- bzw. Abbindeverhalten der Putze kurzfristig derart einzustellen, dass auf etwaige Änderungen im Abbindeverhalten des Putzes bzw. Mörtels aufgrund von Temperaturschwankungen reagiert werden kann, , die zum Beispiel durch einen plötzlichen Wetterumschwung verursacht werden.

Ferner ist es mit herkömmlichen Systemen nicht möglich, kurzfristig auf wechselnden Untergrund zu reagieren. Insbesondere ändert sich nämlich das Abbindeverhalten auch in Abhängigkeit des zu bearbeitenden Untergrundes, beispielsweise einer Ziegelwand, einer Betonwand und dergleichen.

Bei einem derartigem "Materialwechsel", also beispielsweise einem Übergang von einer zu bearbeitenden Ziegelwand auf eine Betonwand, ist es daher wünschenswert, kurzfristig die Abbindezeiten des Putzes- bzw. Mörtels an den neuen Untergrund einzustellen, um ein gleichmäßiges Abbinden bzw. Erstarren des Putzes- bzw. Mörtels zu erreichen.

### Aufgabenstellung

Ausgehend vom vorstehend genannten Stand der Technik ist es eine Aufgabe der vorliegenden Erfindung, ein System zur Verfügung zu stellen, mit dem die eingangs erwähnten Nachteile behoben werden können und die Abbindezeit des erstarrungsfähigen Baumaterials verkürzt werden kann, vorzugsweise exakt auf eine vom Verarbeiter gewünschte Abbindezeit eingestellt werden kann. Insbesondere ist es dabei eine Aufgabe der Erfindung, dass die Abbindezeit des erstarrungsfähigen Baumaterials in gewünschter Weise frei eingestellt werden kann, ohne dass hierfür ein komplexes System notwendig ist.

Eine weitere Aufgabe der Erfindung ist die Schaffung einer geeigneten Zugabeeinrichtung.

Diese Aufgabe wird gelöst mit dem System zum Aufbereiten und Aufbringen von erstarrungsfähigem Baumaterial nach Anspruch 1.

Gemäß einer bevorzugten Ausführungsform weist das System dabei auf:

Eine Verarbeitungseinrichtung mit einer ersten Zuführöffnung und einer zweiten Zuführöffnung, zur Aufnahme erster und zweiter Ausgangsstoffe für das erstarrungsfähige Baumaterial, mindestens eine erste Zuführvorrichtung, zum Zuführen des ersten Ausgangsstoffes zu der Verarbeitungseinrichtung, wobei der erste Ausgangsstoff im Wesentlichen riesel- bzw. schüttfähig ist, und eine zweite Zuführvorrichtung, zum Zuführen des zweiten Ausgangsstoffes zu der Verarbeitungseinrichtung, wobei der zweite Ausgangsstoff flüssig ist. Die Verarbeitungseinrichtung umfasst ferner eine ein- oder mehrstufige Mischeinheit, zum Verarbeiten der zugeführten ersten und zweiten Ausgangsstoffe zu dem erstarrungsfähigen Baumaterial, sowie eine Ausgabeeinheit, zur Ausgabe des erstarrungsfähigen Baumaterials über eine Abgabeöffnung. Zwischen der zweiten Zuführvorrichtung und der zweiten Zuführöffnung der Verarbeitungseinrichtung ist eine Zugabeeinrichtung angeordnet, zur Zugabe eines zusätzlichen Mittels in den zweiten Ausgangsstoff, wobei die Zugabeeinrichtung eine erste Anschlussöffnung, zum Anschluss einer ersten Zufuhrleitung von der zweiten Zuführvorrichtung, eine zweite Anschlussöffnung, zum Anschluss an eine Abführleitung zu der Verarbeitungseinrichtung, sowie eine zweite Zufuhrleitung, zum Zuführen des zusätzlichen Mittels aus einer Speichereinrichtung aufweist. Die Zugabeeinrichtung ist dabei durch den zugeführten zweiten Ausgangsstoff hydraulisch betreibbar, zum Erzeugen eines Unterdrucks und damit zum Ansaugen des zusätzlichen Mittels aus der Speichereinrichtung, wobei die Zugabeeinrichtung ferner einen Regler aufweist, zur Einstellung einer Zugabemenge des zusätzlichen Mittels in den zweiten Ausgangsstoff.

Das erstarrungsfähige Baumaterial kann dabei, je nach den Erfordernissen auf der Baustelle, unter Druck oder im Wesentlichen drucklos über die Abgabeöffnung ausgegeben werden.

Vermittels des erfindungsgemäßen Systems ist es dabei erstmalig möglich, das Abbindeverhalten aufzubringender Putzschichten aktiv zu steuern.

Insbesondere ist es dabei möglich, sowohl die Eigenschaften des verwendeten Baumaterials, beispielsweise eines Kalkmörtels, eines Estrichs, eines Gipsmörtels, eines Zementmörtels oder dergleichen, zu berücksichtigen. Gleichzeitig können, durch geeignete Auswahl der Zugabemenge des zusätzlichen Mittels, die auf der Baustelle vorherrschenden Umgebungs- und Witterungsbedingungen berücksichtigt werden. So kann beispielsweise bei trockenem, heißem Wetter eine geringere Menge des zusätzlichen Mittels dem Baumaterial beigemengt werden, da hier mit einer ohnehin schnelleren Erstarrungszeit gerechnet werden kann. Wenn das Wetter jedoch nass und kalt ist, beispielsweise im Herbst oder Winter, so ist mit einer eher verzögerten Erstarrung zu rechnen, so dass hier mittels des erfindungsgemäßen Systems eine größere Menge des zusätzlichen Mittels dem Putz beigemengt werden kann, um dadurch die Abbindezeit im Vergleich zu einem "unbeschleunigten" erstarrungsfähigen Baumaterial bei gleichen Umgebungsbedingungen erheblich zu verringern.

Darüber hinaus ist es auch möglich, unter Berücksichtigung der Eigenschaften des verwendeten Putzes, durch die Zugabe einer entsprechend vorgegebenen Menge des zusätzlichen Mittels eine möglichst schnelle Abbindezeit einzustellen, um dadurch die insgesamt benötigte Zeit für das Verputzen einer Gebäudefassade, eines Raumes oder dergleichen zu reduzieren.

Zudem ist, da die Zugabeeinrichtung von dem zweiten Ausgangsstoff selbst angetrieben wird, nicht nötig, einen separaten Antrieb hierfür vorzusehen. Dadurch kann ein separater Stromanschluß auf der Baustelle eingespart werden. Überdies ist das erfindungsgemäße System robuster ausgebildet als herkömmliche Systeme und aufgrund seiner einfachen Struktur weniger anfällig gegen Partikel im Wasser, beispielsweise Sand oder dergleichen. Somit können Ausfälle vermieden werden, wodurch wiederum die Wartungszeiten verkürzt und die Kosten für ein derartiges System gesenkt werden können.

Da ferner das zusätzlichen Mittel durch Unterdruck der Zugabeeinrichtung zugeführt wird, ist es nicht nötig, hierfür gesonderte Pumpen oder dergleichen vorzusehen, wodurch die Kosten weiter gesenkt und die Fehleranfälligkeit reduziert werden können. Zudem kann das System auf der Baustelle einfach aufgebaut und in Betrieb gesetzt werden.

Das erfindungsgemäße System stellt somit auf höchst einfache Weise eine sichere und anwenderfreundliche Technik zur Verfügung, mit der die Abbindezeit des erstarrungsfähigen Baumaterials flexibel eingestellt werden kann, um dadurch die Bauzeiten, insbesondere die Verputzzeiten erheblich zu verkürzen.

Weitere Ausgestaltungen des erfindungsgemäßen Systems sind Gegenstand der Unteransprüche.

So kann die Zugabeeinrichtung fahrbar ausgestaltet sein.

Damit ist es vorteilhaft möglich, dass die separat ausgebildete Zugabeeinrichtung an eine geeignete Stelle neben der Verarbeitungseinrichtung verbringbar ist, ohne dass hierfür beispielsweise schweres Baugerät eingesetzt werden müsste.

Gemäß einer weiteren Ausführungsform kann die Zugabeeinrichtung eine Schaltvorrichtung aufweisen, zum Aktivieren und Deaktivieren der Zugabeeinrichtung ohne den Durchfluss des zweiten Ausgangsstoffs zu unterbrechen.

Damit ist es vorteilhaft möglich, das zusätzliche Mittel nur dann dem zweiten Ausgangsstoff zuzugeben, wenn dies auch gewünscht ist. Gleichwohl muss die Zugabeeinrichtung dabei jedoch nicht erst aufwändige demontiert werden, wenn eine Zugabe des zusätzlichen Mittels gerade nicht gewünscht ist. Vielmehr kann die Zugabeeinrichtung in dem System verbleiben und wird lediglich ausgeschaltet, so dass, ohne Beeinträchtigung des Durchflusses des zweiten Ausgangsstoffs eine Beimengung des zusätzlichen Mittels für einen gewissen Zeitraum unterbrochen werden kann.

So kann nämlich die Standzeit des Systems aufgrund von Umbauarbeiten erheblich verkürzt werden, was wiederum die auf der Baustelle entstehenden Kosten senken kann.

Auch ist es denkbar, dass die Verarbeitungseinrichtung ein Druckregelventil zum Einstellen und/oder Überwachen des Drucks und/oder der Durchflussmenge des zweiten Ausgangsstoffs aufweist.

Auf diese Weise kann in vorteilhafter Art verhindert werden, dass aufgrund eines zu hohen Druck die Verarbeitungseinrichtung beschädigt wird. Zudem kann verhindert werden, dass das erstarrungsfähige Baumaterial aufgrund einer zu hohen Durchflussmenge zu dünnflüssig, also "verwässert" wird, wodurch es nicht mehr verwendet werden kann. Vielmehr gewährt die Druckkontrolle und/oder Einstellung der Durchflußmenge einen konstanten Wasserstrom pro Zeiteinheit.

Bei einer weiteren Ausführungsform kann das Druckregelventil derart an der Verarbeitungseinrichtung vorgesehen ist, dass der zweite Ausgangsstoff zunächst von der zweiten Zuführvorrichtung dem Druckregelventil und von dort der Zugabeeinrichtung zuführbar ist, zur Beimengung des zusätzlichen Mittels.

Somit ist es vorteilhaft möglich, nicht nur eine Beschädigung der Verarbeitungseinrichtung zu vermeiden sondern gleichzeitig sicherzustellen, dass der zweite Ausgangsstoff auch der Zugabeeinrichtung mit einem/einer vorher festgelegten Druck und/oder Durchflussmenge zugeführt wird, um auf diese Weise eine Beschädigung der Zugabeeinrichtung aufgrund zu hoher Werte zu vermeiden.

Zudem wird, durch das Beaufschlagen der Zugabeeinrichtung mit dem durch das Druckregelventil eingestellten zweiten Ausgangsstoff ferner gewährleistet, dass die Zugabeeinrichtung mit der gewünschten Leistung durch den zweiten Ausgangsstoff angetrieben wird, ohne dass hierfür gesonderte Überwachungs- und Einstellvorrichtungen notwendig wären.

Gemäß einer weiteren Ausführungsform ist die Zugabeeinrichtung in Form einer Dosierpumpe aufgebaut ist, die nach dem Injektorprinzip oder als hydraulisch betriebene Kolbenpumpe arbeitet.

Hierbei kann, bei einer nach dem Injektorprinzip arbeitenden Pumpe, in der Pumpe durch den diese durchströmenden zweiten Ausgangsstoff ein Unterdruck erzeugt werden, der das zusätzliche Mittel ansaugt und durch eine hierfür vorgesehene Düse dem zweiten Ausgangsstoff beimengt.

Auch bei einer als hydraulisch betriebenen Kolbenpumpe ist es möglich, diese durch den zweiten Ausgangsstoff zu betreiben. Hierbei wird der zweite Ausgangsstoff in die Pumpe eingebracht, wodurch die Kolben angetrieben werden, um einen Unterdruck zu erzeugen, mittels dem das zusätzliche Mittel angesaugt wird und dem zweiten Ausgangsstoff quasi "getaktet" beigemengt wird. Alternativ kann der zu verarbeitende Mörtel schon vorab mit einem Abbindebeschleuniger oder -verzögerer versetzt sein. Diesem Mörtel kann dann, beispielsweise in Abhängigkeit von dem zu bearbeitenden Untergrund oder den auf der Baustelle herrschenden Witterungsbedingungen über die Pumpe zusätzlich ein Abbindebeschleuniger oder -verzögerer zugeführt werden, der dann in den Putz- bzw. Mörtel eingemischt wird.

In beiden Fällen ist es dabei besonders vorteilhaft möglich, dass die Zugabeeinrichtung durch den zweiten Ausgangsstoff selbst angetrieben wird, so dass kein zusätzlicher Antrieb, beispielsweise durch einen Elektromotor, nötig ist.

Einer weiteren Ausführungsform folgend kann die Zugabeeinrichtung als hydraulisch betriebene Dosierkolbenpumpe aufgebaut sein, die ein Gehäuse mit einer darin angeordneten Antriebseinheit und einer Dosiereinheit aufweist.

Die Antriebseinheit kann dabei einen Antriebskolben aufweisen, der durch den über die erste Anschlussöffnung zugeführten zweiten Ausgangsstoff antreibbar ist, während die Dosiereinheit einen Dosierkolben aufweist, der durch eine Bewegung des Antriebskolbens der Antriebseinheit antreibbar ist, zur Erzeugung eines Unterdrucks und zur Zufuhr des zusätzlichen Mittels in eine in der Zugabeeinrichtung ausgebildeten Mischkammer.

Das in der Mischkammer erzeugte Gemisch aus dem zweiten Ausgangsstoff und dem zusätzlichen Mittel kann über die zweite Anschlussöffnung aus der Zugabeeinrichtung der Verarbeitungseinrichtung zugeführt werden, wobei die Menge des in die Mischkammer über die Dosiereinheit zugeführten zusätzlichen Mittels über den Regler derart einstellbar sein kann, dass diese proportional zur Menge des zugeführten zweiten Ausgangsstoffes ist.

Auf diese Weise ist es vorteilhaft möglich, Durchsatz- oder Druckschwankungen, die beispielsweise durch einen Druckabfall in der auf der Baustelle verfügbaren Wasserversorgung hervorgerufen werden, auszugleichen.

Gemäß einer Ausführungsform weist der Regler einen Stellring sowie eine Skala auf. Der Stellring weist zudem eine Kerbe auf, zur Auswahl eines gewünschten Wertes auf der Skala.

Hiermit ist es auf höchst einfache Weise möglich, das gewünschte Mischungsverhältnis zwischen dem zweiten Ausgangsstoff und dem zusätzlichen Mittel schnell und einfach anhand von vorab festgelegten Werten einzustellen.

Nach einer weitem Ausführungsform kann vermittels des Reglers ein Hubweg des Dosierkolbens und/oder ein Volumen der Mischkammer eingestellt werden, zur Einstellung der Menge des in die Mischkammer über die Dosiereinheit zugeführten zusätzlichen Mittels.

In einer weiteren Ausführungsform kann die Verarbeitungseinrichtung eine Putzmaschine bzw. Mischmaschine, vorzugsweise eine Feinputzmaschine, sein. Zudem kann die erste Zuführöffnung ein Anschlussstück für zumindest ein Silo oder ein Einschütttrichter zur manuellen Zugabe des ersten Ausgangsstoffes umfassen. In einer weiteren Ausführungsform kann die zweite Zuführvorrichtung zudem ein Wasseranschluss sein und der der Verarbeitungseinrichtung zugeführte zweite Ausgangsstoff ist Wasser.

Eine weitere Ausführungsform sieht zudem vor, dass der der Verarbeitungseinrichtung zugeführte riesel- bzw. schüttfähige erste Ausgangsstoff aus einer Gruppe bestehend aus Putzen, insbesondere Feinputzen, Mörtel, Zement, Estrich und dergleichen ausgewählt ist.

Der Putz kann dabei ein Kalkzementputz sein, bestehend aus Luftkalk, Zement und hochwertigem Kalkbrechsand. Alternativ kann der Putz auch ein Kalkzement-Leichtputz sein, bestehend aus Luftkalk, Zement, hochwertigem Kalkbrechsand, Leichtzuschlag und Faserzusatz.

Ferner ist es denkbar, dass weitere Arten von Putzen, beispielsweise Gipsputze, Anwendung finden, so lange diese dafür geeignet sind, vermittels einer Putz- bzw. Mischmaschine angemischt und aufgebracht zu werden.

Gemäß einer weiteren Ausführungsform ist das dem zweiten Ausgangsstoff durch die Zugabeeinrichtung beigemengte, zusätzliche Mittel ein Abbindebeschleuniger und/oder -verzögerer. Der Abbindebeschleuniger kann dabei in konzentrierter oder unkonzentrierter Form vorliegen. Auch ist es möglich, dass zusätzlich zu dem Abbindebeschleuniger und/oder -verzögerer Farbpigmente in dem zusätzliche Mittel enthalten sind, die dabei in gelöster oder suspendierter Form vorliegen.

Damit kann in vorteilhafter Weise nicht nur das gewünschte Abbindeverhalten erreicht werden sondern gleichzeitig der, beispielsweise vom Bauherrn, gewünschte Farbauftrag auf die zu bearbeitende Fläche realisiert werden.

Zudem ist es denkbar, dass je nach verwendeter Putzart, beispielsweise Kalkputz, Zementputz oder Gipsputz unterschiedliche Abbindebeschleuniger oder auch Abbindeverzögerer, je nach gewünschtem Abbinde- bzw. Erstarrungsverhalten der gewählten Putze zur Anwendung kommen

In einer weiteren Ausführungsform ist denkbar, dass die Menge des dem zweiten Ausgangsstoff zugegebenen Abbindebeschleunigers und/oder Abbindeverzögerers in Abhängigkeit von einer gewünschten Abbindezeit des erstarrungsfähigen Baumaterials frei einstellbar ist.

Auf diese Weise ist es möglich, die Menge des zugegebenen Abbindebeschleunigers bzw. -verzögerers derart zu wählen, dass die gewünschten Abbinde- bzw. Erstarrungszeiten erreicht werden können. Insbesondere ist es dabei denkbar, die vorherrschenden Witterungsbedingungen auf der Baustelle zu berücksichtigen.

Durch geeignete Auswahl der Zugabemenge an Abbindebeschleuniger und/oder Abbindeverzögerer kann dabei insbesondere erreicht werden, dass in Temperaturbereichen von etwa 0°C bis +40°C, insbesondere in Temperaturbereichen zwischen +3°C bis +35°C, die gewünschten Abbinde- bzw. Erstarrungszeiten in Abhängigkeit von den vorherrschenden Umgebungsbedingungen und der verwendeten Putzart erreicht werden können.

Gemäß einer weiteren Ausführungsform ist die Speichereinrichtung ein Kanister oder dergleichen.

Durch die Verwendung derartiger Gebinde ist es möglich, das zusätzlichen Mittel, also den Abbindebeschleuniger und/oder Abbindeverzögerer, in leicht handelbaren Größen auf der Baustelle vorrätig zu halten. Zudem kann durch die Verwendung von leicht austauschbaren Kanistern, verschlossenen Eimern oder Fässern die Zugabeeinrichtung klein gehalten werden.

In einer weiteren Ausführungsform zeigt die Skala einen die Abbindezeit darstellenden Wert an. Beispielsweise kann hier eine Prozentskala dargestellt sein, die das Mischungsverhältnis bzw. eine Dosiereinstellung von zugeführtem Wasser und Abbindebeschleuniger und/oder Abbindeverzögerer wiedergibt.

Hierbei bedeutet beispielsweise eine Anzeige von 1% auf der Skala ein Mischungsverhältnis von 1 Teil Abbindebeschleuniger auf 100 Teile Wasser. Eine Anzeige von 2% auf der Skala bedeutet beispielsweise ein Mischungsverhältnis von 2 Teilen Abbindebeschleuniger auf 100 Teile Wasser und eine Anzeige von 10% auf der Skala bedeutet beispielsweise ein Mischungsverhältnis von 10 Teilen Abbindebeschleuniger auf 100 Teile Wasser, und so weiter.

Gemäß dieser Ausführungsform kann Abbindezeit umso kürzer ausfallen, je höher das Mischungsverhältnis ist. Beispielsweise ist die Abbindezeit bei einer Dosiereinstellung von 2% (also 2 Teilen Abbindebeschleuniger zu 100 Teilen Wasser) etwa 2 Stunden. Bei einer Dosiereinstellung von 3% kann die Abbindezeit dagegen nur noch 1,5 Stunden betragen, und so weiter.

Mit dem erfindungsgemäßen System kann somit auf höchst einfache und effektive Weise die gewünschte Abbindezeit des erstarrungsfähigen Baumaterials eingestellt werden.

Die eingangs erwähnte Aufgabe wird ferner gelöst mit der Zugabeeinrichtung nach Anspruch 22.

Die Zugabeeinrichtung ist dabei insbesondere in Form einer hydraulisch betriebenen Dosierkolbenpumpe ausgebildet und zur Verwendung in einem wie vorstehend diskutierten System geeignet. Die erfindungsgemäße Zugabeeinrichtung weist dabei auf: eine erste Anschlussöffnung, zum Anschluss einer Zufuhrleitung von einem Wasseranschluss, eine zweite Anschlussöffnung, zum Anschluss einer Abführleitung zu einer Verarbeitungseinrichtung, eine Zufuhrleitung zum Zuführen eines zusätzlichen Mittels aus einer Speichereinrichtung, sowie ein Gehäuse mit einer darin angeordneten Antriebseinheit und einer Dosiereinheit. Die erste Anschlussöffnung, die zweite Anschlussöffnung und die Zufuhrleitung sind an dem Gehäuse ausgebildet. Die Antriebseinheit weist einen Antriebskolben auf, der durch den über die erste Anschlussöffnung zugeführten zweiten Ausgangsstoff antreibbar ist. Die Dosiereinheit weist einen Dosierkolben auf, der durch eine Bewegung des Antriebskolbens der Antriebseinheit antreibbar ist, zur Erzeugung eines Unterdrucks und zur Zufuhr des zusätzlichen Mittels in eine in der Zugabeeinrichtung ausgebildeten Mischkammer, wobei das in der Mischkammer erzeugte Gemisch aus dem zweiten Ausgangsstoff und dem zusätzlichen Mittel über die zweite Anschlussöffnung aus der Zugabeeinrichtung der Verarbeitungseinrichtung zugeführt wird, und die Menge des in die Mischkammer über die Dosiereinheit zugeführten zusätzlichen Mittels über einen Regler derart einstellbar ist, dass diese proportional zur Menge des zugeführten zweiten Ausgangsstoffes ist.

In einer bevorzugten Ausführungsform kann das zusätzliche Mittel ein Abbindebeschleuniger und/oder ein Abbindeverzögerer ist und die Menge des zugeführten Abbindebeschleunigers und/oder Abbindeverzögerers kann, in Abhängigkeit von einer gewünschten Abbindezeit des erstarrungsfähigen Baumaterials, frei einstellbar sein.

Ferner ist denkbar, dass der Regler einen Stellring sowie eine Skala aufweist und der Stellring eine Kerbe aufweist, zur Auswahl eines gewünschten Wertes auf der Skala, wobei die Skala einen eine Abbindezeit eines erstarrungsfähigen Baumaterials darstellenden Wert anzeigt.

Die vorstehend in Zusammenhang mit dem System zum Aufbereiten und Auf bringen von erstarrungsfähigem Baumaterial diskutierten Vorteile ergeben sich in analoger Weise auch für die erfindungsgemäße Zugabeeinrichtung, so dass auf eine Wiederholung der Aufzählung dieser Vorteile verzichtet wird.

### Kurze Beschreibung der Figuren

Die vorstehend diskutierten Merkmale werden nachfolgend anhand der Beschreibung bevorzugter Ausführungsformen unter Bezugnahme auf die beigefügten Zeichnungen verdeutlicht.

Dabei zeigt:
- Fig. 1: eine schematische Übersichtsdarstellung eines Versorgungsplans für die Verarbeitungseinrichtung und die Zugabeeinrichtung;
- Fig. 2: eine schematische Darstellung einer Verarbeitungseinrichtung mit einer damit verbundenen Zugabeeinrichtung;
- Fig. 3: eine Darstellung der Zugabeeinrichtung;
- Fig. 4A: eine Detailansicht der an der Zugabeeinrichtung vorgesehenen Schaltvorrichtung in einer ersten Schaltstellung;
- Fig. 4B: eine Detailansicht der an der Zugabeeinrichtung vorgesehenen Schaltvorrichtung in einer zweiten Schaltstellung;
- Fig. 5: eine Schnittdarstellung der Zugabeeinrichtung;
- Fig. 6: eine vergrößerte Teilansicht des an der Zugabeeinrichtung vorgesehenen Reglers; und
- Fig. 7: eine Detailansicht des an der Zugabeeinrichtung vorgesehenen Reglers.

### Beschreibung bevorzugter Ausführungsformen

Nachfolgend werden, unter Bezugnahme auf die beigefügten Figuren, bevorzugte Ausführungsformen der Erfindung beschrieben.

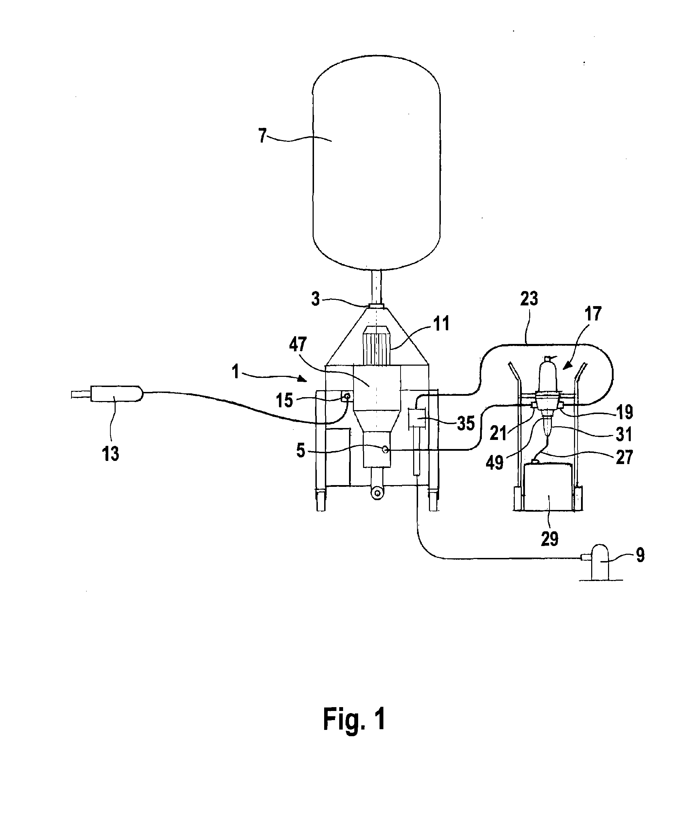

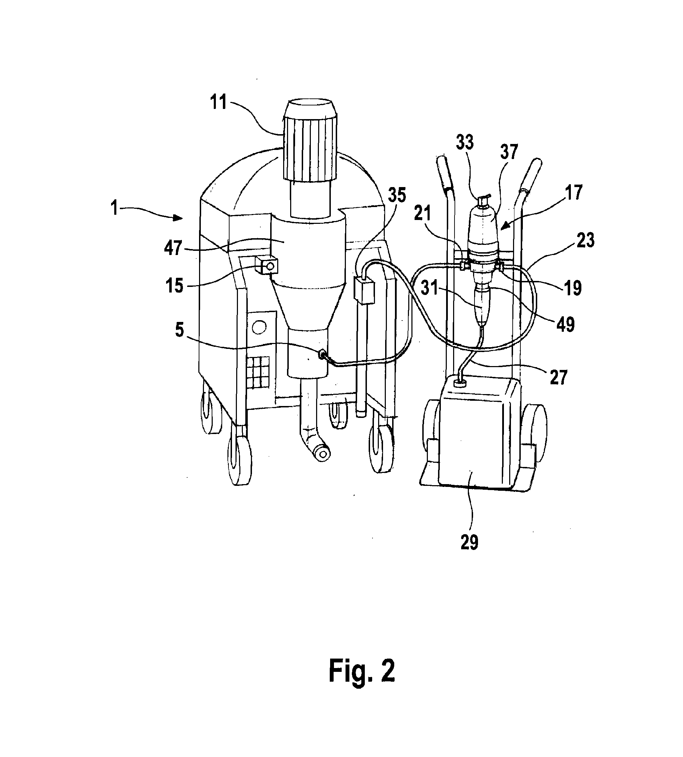

Bezug nehmend auf die Figuren 1 und 2 wird zunächst der Aufbau einer Ausführungsform einer Verarbeitungseinrichtung 1 mit einer damit verbundenen Zugabeeinrichtung 17 beschrieben.

Die Verarbeitungseinrichtung 1 ist dabei als Putzmaschine ausgebildet und weist eine erste Zuführöffnung 3, zur Zufuhr von Putzen, sowie eine zweite Zuführöffnung 5, zur Zufuhr von Wasser auf.

Die Putze oder entsprechende Putzmischungen aus Putzbestandteilen und Sand oder dergleichen werden der Putzmaschine 1 von einer ersten Zuführvorrichtung 7, beispielsweise einem Baustoffsilo, zugeführt. Dieses Silo kann dabei nur den Putz oder die Putzmischung enthalten. Alternativ kann das Silo auch mehrere Kammern aufweisen, in denen sich der Rohputz sowie weitere Additive, beispielsweise Sand, Farbpartikel und dergleichen befinden, die der Putzmaschine 1 durch eine Fördervorrichtung zugeführt werden.

Über die zweite Zuführöffnung 5 wird der Putzmaschine 1 Wasser von einer zweiten Zuführvorrichtung 9, beispielsweise einem Hydranten, einem Baustellenwasseranschluß oder dergleichen, zugeführt, um dann, in einer Mischkammer 47 der Putzmaschine 1, von einer Mischeinheit 11 mit dem schüttfähigen Mörtel bzw. Putz aus dem Silo zu einer homogenen Masse vermengt zu werden. Diese Masse wird dann über eine Ausgabeöffnung 15 einer Ausgabeeinheit 13, beispielsweise einer Spritzpistole, zugeführt, von wo aus der so vorbereitete Putz auf eine zu bearbeitende Fläche aufgebracht werden kann.

Zwischen der Putzmaschine 1 und der Wasserzuführvorrichtung 9 ist eine Zugabeeinrichtung 17 in Form einer Dosierpumpe angeordnet.

Genauer gesagt wird, bei dieser Ausführungsform, eine Leitung von der zweiten Zuführvorrichtung 9, beispielsweise dem Hydranten, dem Baustellenwasseranschluß oder einem Tankfahrzeug, zu einem Einfüllanschluss eines Druckregelventils 35 an der Putz- bzw. Mischmaschine 1 gelegt. Von diesem Einfüllanschluss des Druckregelventils 35 strömt das von der zweiten Zuführvorrichtung 9 kommende Wasser durch das Ventil, wobei der Druck und/oder die Durchflussmenge des Wassers auf einen benötigten Wert geregelt werden. An einem Auslaufanschluss des Druckregelventils 35 ist eine weitere Leitung 23 angebracht, die das Wasser einer ersten Anschlussöffnung 19 der Dosierpumpe 17, beispielsweise einem Bajonettanschluss, einem Steckanschluss, einem Schraubanschluss oder dergleichen, zuführt.

Durch diese Anschlussöffnung 19 gelang das Wasser in die Dosierpumpe 17, wo es mit einem Abbindebeschleuniger und/oder -verzögerer vermischt wird, der durch eine weitere Zufuhrleitung 27 in die Dosierpumpe 17 eingeleitet wird.

Das mit dem Abbindebeschleuniger und/oder -verzögerer derart vermengte Wasser wird dann über eine zweite Ausschussöffnung 21 aus der Dosierpumpe 17 ausgetragen und in die Putzmaschine 1 über die Zuführöffnung 5 eingespeist, wo es dann mit dem über die erste Zuführöffnung zugeführten Mörtel bzw. Putz zu einer homogenen Masse vermengt wird.

Obgleich in dieser Ausführungsform ein Druckregelventil 35 vorgesehen ist, kann das von der zweiten Zuführvorrichtung 9 zugeführte Wasser auch direkt der Putzmaschine 1 zugeführt werden, ohne dass hierbei ein Druckregelventil 35 zwischengeschaltet ist.

In diesem Fall strömt das von der zweiten Zuführvorrichtung 9 kommende Wasser zunächst ohne den Umweg über das Druckregelventil 35 direkt in die Anschlussöff nung 19 der Dosierpumpe 17. In der Pumpe 17 wird es dann, wie vorstehend erläutert, mit dem Abbindebeschleuniger und/oder -verzögerer vermengt und über die Anschlussöffnung 21 aus der Dosierpumpe 17 ausgetragen und in die Putzmaschine 1 über die Zuführöffnung 5 eingespeist, wo es dann mit dem über die erste Zuführöffnung zugeführten Putz zu einer homogenen Masse vermengt wird.

Der dem Wasser beigemengte Abbindebeschleuniger und/oder -verzögerer ist dabei in einem unter der Dosierpumpe 17 angeordneten Speichergefäß 29 gelagert. In dieser Ausführungsform ist das Speichergefäß 29 ein Kanister. Gleichwohl kann anstelle des Kanisters auch ein Fass, ein verschlossener Eimer oder dergleichen verwendet werden, solange die entsprechenden Gefäße dazu geeignet sind, einen flüssigen Abbindebeschleuniger und/oder -verzögerer in konzentrierter oder reiner Form sicher zu lagern.

In eine Öffnung des Kanisters 29 ist eine als Saugleitung ausgebildete Zufuhrleitung 27 eingebracht, über die der in dem Kanister gelagerte Abbindebeschleuniger und/oder -verzögerer der Dosierpumpe 17 zugeführt werden kann.

Diese Saugleitung 27 ist an einem Regler 31 der Dosierpumpe angeflanscht und verbindet den Kanister 29 mit der Dosierpumpe 17 derart, dass der Abbindebeschleuniger und/oder -verzögerer in die Pumpe 17 eingesaugt werden kann.

Der Regler 31 weist dabei ein manuell verstellbares Regelorgan in Form eines Stellrings 49 sowie eine an dem Gewinde des Stellringschafts angeordnete Skala 51 auf. Der Regler 31 wird später im Detail beschrieben werden.

Wie insbesondere aus der Fig. 2 schließlich ferner ersichtlich ist, ist die Dosierpumpe 17 separat von der Putzmaschine 1 ausgebildet und fahrbar gelagert, so dass die Pumpe 17 und die Putzmaschine 1 auf engstem Raum effektiv angeordnet werden können.

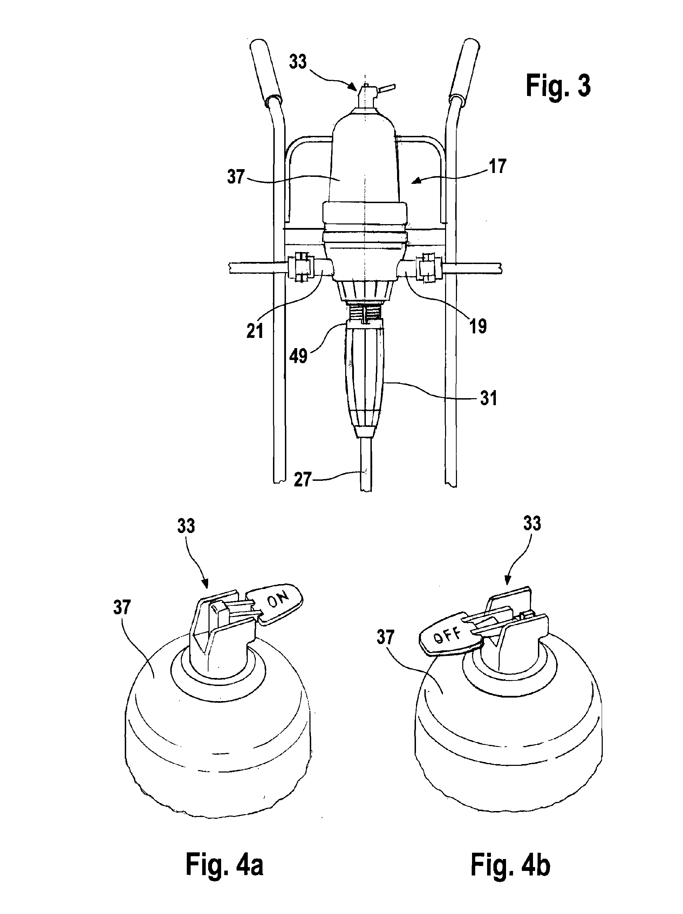

Nachfolgend wird, unter Bezugnahme auf die Figuren 3 bis 6, die Dosierpumpe 17 im Detail beschrieben.

Wie aus Fig. 3 ersichtlich ist, besteht die Dosierpumpe 17 aus einem Gehäuse 37, das die Pumpenmechanik umgibt. Auf der Oberseite des Pumpengehäuses 37 ist eine später beschriebene Schaltvorrichtung 33 angeordnet.

Im unteren Bereich der Dosierpumpe 17 befinden sich die beiden Anschlussöff nungen 19 und 21, die einander gegenüberliegend koaxial angeordnet sind. Hierbei ist auch denkbar, dass die beiden Anschlussöffnungen 19 und 21 horizontal und/oder vertikal versetzt zueinander angeordnet sind, solange eine ausreichende Zu- und Abfuhr des in der Dosierpumpe 17 geförderten Wassers gewährleistet werden kann.

An einem unteren Ende der Dosierpumpe 17 ist der Regler 31 angeflanscht, mittels dem die Zugabemenge des Abbindebeschleunigers und/oder -verzögerers aus dem Kanister 29 eingestellt werden kann.

Wie in den Figuren 4A und 4B dargestellt, ist die Schaltvorrichtung 33 als Kippschalter ausgebildet. Dieser Kippschalter 33 kann dabei zwischen zwei Positionen umgeschalten werden, nämlich einer AN-Position und einer AUS-Position. In der AN-Position ist die Dosierpumpe 17 aktiviert und kann, durch den in ihr erzeugten Unterdruck, Abbindebeschleuniger und/oder -verzögerer aus dem Kanister 29 in die Pumpe saugen. Wenn der Kippschalter 33 in der AUS-Position ist, ist die Dosierpumpe in so weit deaktiviert, als die in ihr befindliche Mechanik in einer Ruhestellung verharrt. Auf diese Weise wird in der Dosierpumpe 17 kein Unterdruck erzeugt und somit auch h kein Abbindebeschleuniger und/oder -verzögerer aus dem Kanister in die Pumpe 17 angesaugt. Obgleich die Pumpe 17 inaktiv ist, kann das aus der zweiten Zuführvorrichtung 9 zugeführte Wasser ungehindert die Dosierpumpe 17 durchströmen und wird auf diesem Wege der Putzmaschine 1 zugeführt.

An Stelle des Kippschalters 33 kann auch ein Wippschalter, ein Druckschalter oder dergleichen verwendet werden, der in mindestens zwei Schaltpositionen schaltbar ist.

Die vorstehend beschriebene Dosierpumpe 17 wird nachfolgen unter Bezugnahme auf die detaillierte Schnittdarstellung der Fig. 4 weiter beschrieben.

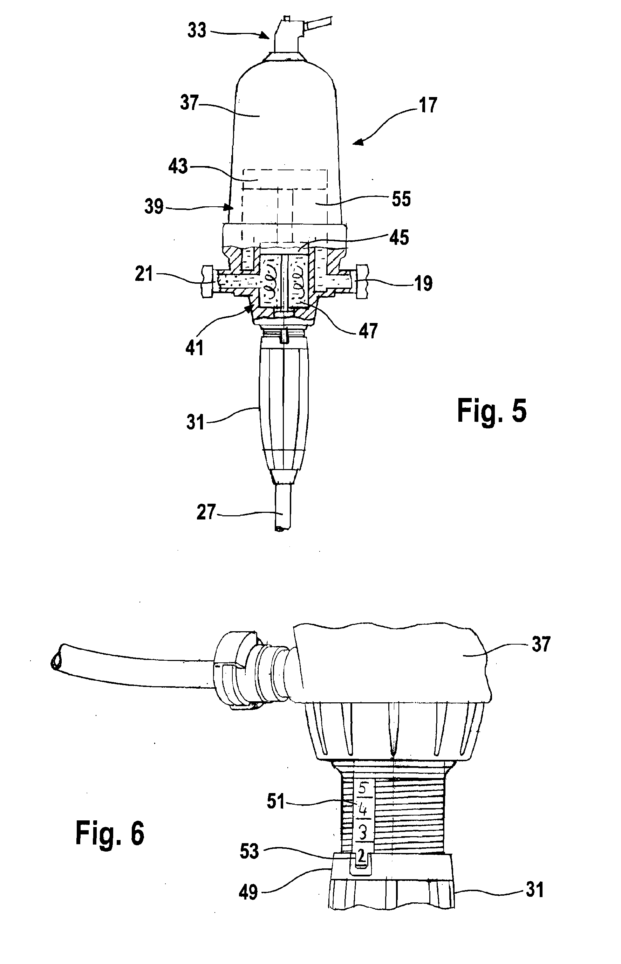

Wie in Fig. 5 dargestellt, ist die Pumpe 17 als Kolbenpumpe ausgebildet.

In dem Gehäuse 37 der Dosier-Kolbenpumpe 17 ist eine Hauptkammer 55 sowie eine Mischkammer 47 ausgebildet. Ferner sind eine Antriebseinheit 39 sowie eine Dosiereinheit 41 vorgesehen.

Die Antriebseinheit besteht aus der Hauptkammer 55 und einem Antriebskolben 43, während die Dosiereinheit 41 aus einer Mischkammer 47 und einem Dosierkolben 45 besteht.

Das über die Anschlussöffnung 19 der Pumpe 17 zugeführte Wasser verdrängt den Antriebskolben 43 in der Pumpe 17 derart, dass dieser entlang einer vertikalen Achse der Pumpe 17 nach oben bewegt wird. Der Antriebskolben 43 steht dabei in Wirkverbindung mit dem Dosierkolben 45.

Hierbei ist es denkbar, dass der Dosierkolben 45 und der Antriebskolben 43 miteinander fest verbunden sind, so dass eine durch das eingespeiste Wasser verursachte Aufwärtsbewegung des Antriebskolbens 43 gleichzeitig den Dosierkolben 45 nach oben bewegt.

Es ist auch denkbar, dass der Antriebskolben 43 durch den Wasserdruck des zugeführten Wassers nach oben bewegt wird und damit einen Unterdruck in der Pumpe 17 erzeugt, die den Dosierkolben 45 nach oben "saugt".

Die entlang der Vertikalachse der Pumpe 17 gerichtete Aufwärtsbewegung des Dosierkolbens 45 erzeugt einen Unterdruck in der Saugleitung 27, wodurch der im Kanister 29 gelagerte Abbindebeschleuniger und/oder -verzögerer in die Pumpe 17 eingesaugt wird.

Über die Saugleitung 27 gelangt der Abbindebeschleuniger und/oder -verzögerer in eine Mischkammer 47, wo der Abbindebeschleuniger und/oder -verzögerer mit dem der Pumpe zugeführten und als Antriebsmedium dienenden Wasser vermengt wird. Das derart aufbereitete Wasser wird dann, verursacht durch eine Abwärtsbewegung des Kolbens Antriebskolbens 43, über die Anschlussöffnung 21 aus der Dosierpumpe 17 ausgegeben und der Putzmaschine 1 zugeführt.

Die Menge des über den Dosierkolben 45 in die Dosier-Kolbenpumpe 17 ansaugbaren Abbindebeschleunigers und/oder -verzögerers wird dabei über den nachfolgen genauer beschriebenen Regler 17 eingestellt.

Wie in Fig. 6 dargestellt, umfasst der Regler 31 einen Stellring 49, der eine Kerbe 53 aufweist. Der Regler 34 umfasst ferner eine auf einem Gewindeschaft des Stellrings 49 ausgebildete Skala 51. Diese Skala 51 kann hierbei unterschiedliche Werte wiedergeben, die in Zusammenhang mit der Abbindezeit stehen. In dieser Ausführungsform gibt die Skala 51 Mischungsverhältnisse zwischen dem Wasser und dem Abbindebeschleuniger und/oder -verzögerer in Prozent (%) wieder. Hierbei bedeutet beispielsweise die Anzeige 4% ein Mischungsverhältnis von 4 Teilen Abbindebeschleuniger und/oder -verzögerer zu 100 Teilen Wasser.

Alternativ kann die Skala 51 auch Zeitangaben, Mengenangaben und dergleichen anzeigen, anhand welcher, unter Berücksichtigung der Eigenschaften des verwendeten Putzes und der Umgebungsbedingungen die zu erwartende Abbindezeit feststellbar und einstellbar ist.

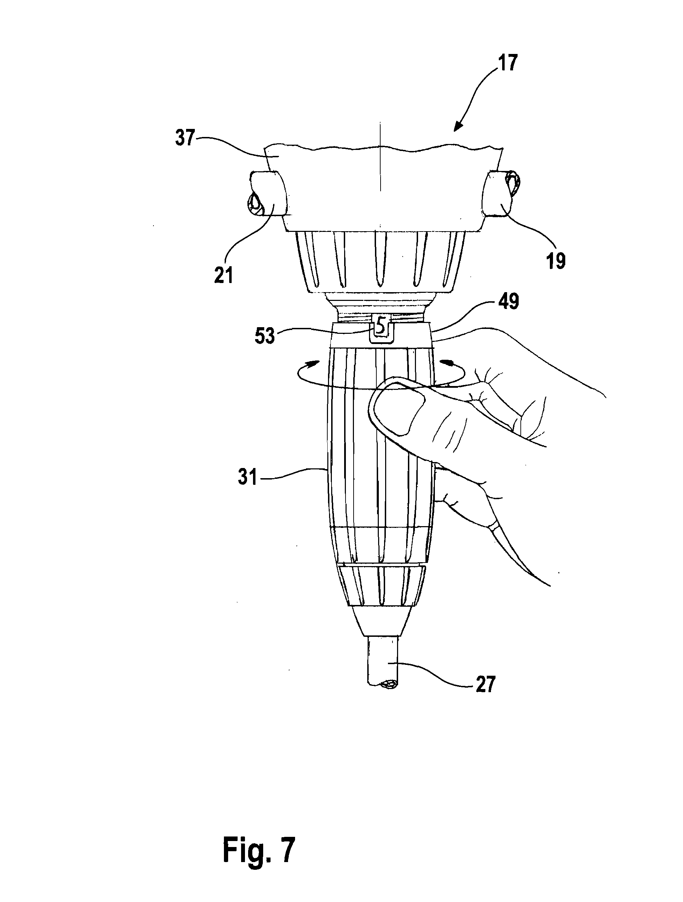

Wie in Fig. 7 weiter dargestellt, ist der Regler 31 manuell betreibbar vorgesehen.

Insbesondere kann dabei nämlich ein Arbeiter auf der Baustelle durch einfaches Verdrehen des Stellrings 51 derart, dass die Kerbe 53 den gewünschten Wert auf der Skala 51 anzeigt bestimmen, welche Abbindezeit für den aufzubringenden Putz zu erwarten ist.

Mittels der vorliegenden Erfindung ist es dabei erstmalig möglich, bei einer überraschend einfachen Anordnung eine überwiegend freie Einstellbarkeit der Abbindezeit des Abbindebeschleunigers und/oder -verzögerers zu erreichen.

So ist es dabei aufgrund der Verwendung des der Putz- bzw. Mischmaschine zugeführten Wassers als Antriebsmedium für die Dosierpumpe insbesondere möglich, die Zugabemenge des Abbindebeschleunigers und/oder -verzögerers immer proportional zur zugeführten Wassermenge zu gestalten, so dass selbst kleinste Schwankungen im Druck und/oder der Durchflussmenge des Wasser ausgeglichen werden können, ohne e dass sich die Eigenschaften des Putzes bzw. Mörtels verändern.

Darüber hinaus schafft die vorliegende Erfindung eine Technik, die auf höchst einfache Weise den Arbeitern auf der Baustelle gestattet, die Erstarrungs- bzw. Abbindezeiten der aufgetragenen Putze in unmittelbarer Reaktion auf vorherrschende Witterungsbedingungen, Wandbeschaffenheit und/oder Putzcharakteristika einzustellen, um das gewünschte Verputzergebnis in, verglichen zu herkömmlichen Putztechniken, signifikant verkürzter Zeit zu erreichen.

Mit dem vorstehend diskutierten System kann somit auf der Baustelle in höchst einfacher Weise sichergestellt werden, dass Mörtel bzw. Putze in der gewünschten Abtrocken- bzw. Abbinde-Eigenschaft aufgebracht werden können.

So ist es hierbei nur notwendig, eine Verarbeitungseinrichtung mit den vorstehend diskutierten Merkmalen und mit einer Zugabeeinrichtung mit den vorstehend diskutierten Merkmalen bereitzustellen. Ein erster, riesel- bzw. schüttfähigen Ausgangsstoffs kann dann in die Verarbeitungseinrichtung zugeführt werden, während ein zweite, flüssiger Ausgangsstoffs in die Zugabeeinrichtung eingebracht wird. Ein zusätzliches, flüssiges Mittels wird dann in den zweiten Ausgangsstoff in der Zugabeeinrichtung während dieser die Zugabeeinrichtung durchströmt, beigemengt und der derart aufbereitete zweite Ausgangsstoff wird in die Verarbeitungseinrichtung geführt. Der erste Ausgangsstoff und der derart aufbereitete zweiten Ausgangsstoff werden dort zu einem erstarrungsfähigem Baumaterial durchmischt und über eine Abgabeöffnung zum Aufbringen auf die zu bearbeitende Fläche ausgegeben.

Das dem zweiten Ausgangsstoff beigemengte zusätzliche Mittel ist dabei ein Abbindebeschleuniger und/oder ein Abbindeverzögerer und die Menge des beigemengten Abbindebeschleunigers und/oder Abbindeverzögerers kann derart eingestellt werden, dass diese proportional zur Menge des zugeführten zweiten Ausgangsstoff ist.

Hierbei ist es denkbar, dass die Menge des dem zweiten Ausgangsstoff beigemengten Abbindebeschleunigers und/oder Abbindeverzögerers in Abhängigkeit von einer gewünschten Abbindezeit des erstarrungsfähigen Baumaterials frei einstellbar ist.

Die vorliegende Erfindung betrifft ein System zum Aufbereiten und Aufbringen von erstarrungsfähigem Baumaterial, aufweisend: eine Verarbeitungseinrichtung mit einer ersten Zuführöffnung und einer zweiten Zuführöffnung, zur Aufnahme erster und zweiter Ausgangsstoffe für das erstarrungsfähige Baumaterial, mindestens eine erste Zuführvorrichtung, zum Zuführen des ersten Ausgangsstoffes zu der Verarbeitungseinrichtung, und eine zweite Zuführvorrichtung, zum Zuführen des zweiten Ausgangsstoffes zu der Verarbeitungseinrichtung. Die Verarbeitungseinrichtung weist ferner eine ein- oder mehrstufige Mischeinheit zum Verarbeiten der zugeführten ersten und zweiten Ausgangsstoffe zu dem erstarrungsfähigen Baumaterial, sowie eine Ausgabeeinheit, zur Ausgabe des erstarrungsfähigen Baumaterials über eine Abgabeöffnung, auf. Zwischen der zweiten Zuführvorrichtung und der zweiten Zuführöffnung der Verarbeitungseinrichtung ist eine Zugabeeinrichtung angeordnet, zur Zugabe eines zusätzlichen Mittels in den zweiten Ausgangsstoff. Hierzu umfasst die Zugabeeinrichtung einen Regler, zur Einstellung einer Zugabemenge des zusätzlichen Mittels in den zweiten Ausgangsstoff. Ein weiterer Aspekt der Erfindung betrifft eine hierfür geeignete derartige Zugabeeinrichtung.

## Patentansprüche

1. System zum Aufbereiten und Aufbringen von erstarrungsfähigem Baumaterial, aufweisend:
eine Verarbeitungseinrichtung (1) mit einer ersten Zuführöffnung (3) und einer zweiten Zuführöffnung (5), zur Aufnahme erster und zweiter Ausgangsstoffe für das erstarrungsfähige Baumaterial,
mindestens eine erste Zuführvorrichtung (7) zum Zuführen des ersten Ausgangsstoffes zu der Verarbeitungseinrichtung (1), wobei der erste Ausgangsstoff im Wesentlichen riesel- bzw. schüttfähig ist,
eine zweite Zuführvorrichtung (9) zum Zuführen des zweiten Ausgangsstoffes zu der Verarbeitungseinrichtung (1), wobei der zweite Ausgangsstoff flüssig ist,
wobei die Verarbeitungseinrichtung (1) ferner eine ein- oder mehrstufige Mischeinheit (11), zum Verarbeiten der zugeführten ersten und zweiten Ausgangsstoffe zu dem erstarrungsfähigen Baumaterial, sowie eine Ausgabeeinheit (13), zur Ausgabe des erstarrungsfähigen Baumaterials über eine Abgabeöffnung (15), aufweist,
wobei zwischen der zweiten Zuführvorrichtung (9) und der zweiten Zuführöffnung (5) der Verarbeitungseinrichtung (1) eine Zugabeeinrichtung (17) angeordnet ist, zur Zugabe eines zusätzlichen Mittels in den zweiten Ausgangsstoff,
wobei die Zugabeeinrichtung (17) eine erste Anschlußöffnung (19), zum Anschluß einer ersten Zufuhrleitung (23) von der zweiten Zuführvorrichtung (9), eine zweite Anschlußöffnung (21), zum Anschluß an eine Abführleitung (25) zu der Verarbeitungseinrichtung (1) sowie eine zweiten Zufuhrleitung (27) zum Zuführen des zusätzlichen Mittels aus einer Speichereinrichtung (29) aufweist,
wobei die Zugabeeinrichtung (17) durch den zugeführten zweiten Ausgangsstoff hydraulisch betreibbar ist, zum Erzeugen eines Unterdrucks und damit zum Ansaugen des zusätzlichen Mittels aus der Speichereinrichtung (29), und
wobei die Zugabeeinrichtung (17) einen Regler (31) aufweist, zur Einstellung einer Zugabemenge des zusätzlichen Mittels in den zweiten Ausgangsstoff.

2. System nach Anspruch 1, wobei die Zugabeeinrichtung (17) fahrbar ausgestaltet ist.

3. System nach Anspruch 1, wobei die Zugabeeinrichtung (17) ferner eine Schaltvorrichtung (33) aufweist, zum Aktivieren und Deaktivieren der Zugabeeinrichtung (17) ohne den Durchfluß des zweiten Ausgangsstoffs zu unterbrechen.

4. System nach Anspruch 1, wobei die Verarbeitungseinrichtung (1) ferner ein Druckregelventil (35) zum Einstellen und/oder Überwachen des Drucks und/oder der Durchflußmenge des zweiten Ausgangsstoffs aufweist.

5. System nach Anspruch 4, wobei das Druckregelventil (35) derart an der Verarbeitungseinrichtung (1) vorgesehen ist, dass der zweite Ausgangsstoff zunächst von der zweiten Zuführvorrichtung (9) dem Druckregelventil (35) und von dort der Zugabeeinrichtung (17) zuführbar ist, zur Beimengung des zusätzlichen Mittels.

6. System nach Anspruch 1, wobei die Zugabeeinrichtung (17) in Form einer Dosierpumpe aufgebaut ist, die nach dem Injektorprinzip oder als hydraulisch betriebene Kolbenpumpe arbeitet.

7. System nach Anspruch 6, wobei die Zugabeeinrichtung (17) als hydraulisch betriebene Dosierkolbenpumpe aufgebaut ist aufweisend:
ein Gehäuse (37) mit einer darin angeordneten Antriebseinheit (39) und einer Dosiereinheit (41),
wobei
die Antriebseinheit (39) einen Antriebskolben (43) aufweist, der durch den über die erste Anschlußöffnung (19) zugeführten zweiten Ausgangsstoff antreibbar ist,
die Dosiereinheit (41) einen Dosierkolben (45) aufweist, der durch eine Bewegung des Antriebskolbens (43) der Antriebseinheit (39) antreibbar ist, zur Erzeugung eines Unterdrucks und zur Zufuhr des zusätzlichen Mittels in eine in der Zugabeeinrichtung (17) ausgebildete Mischkammer (47),
das in der Mischkammer (47) erzeugte Gemisch aus dem zweiten Ausgangsstoff und dem zusätzlichen Mittel über die zweite Anschlußöffnung (21) aus der Zugabeeinrichtung (17) der Verarbeitungseinrichtung (1) zugeführt wird, und
die Menge des in die Mischkammer (47) über die Dosiereinheit (41) zugeführten zusätzlichen Mittels über den Regler (31) derart einstellbar ist, dass diese proportional zur Menge des zugeführten zweiten Ausgangsstoffes ist.

8. System nach einem der Ansprüche 1 bis 7, wobei der Regler (31) einen Stellring (49) sowie eine Skala (51) aufweist und der Stellring (49) eine Kerbe (53) aufweist, zur Auswahl eines gewünschten Wertes auf der Skala (51).

9. System nach einem der Ansprüche 1 bis 8, wobei vermittels des Reglers (31) ein Hubweg des Dosierkolbens (45) und/oder ein Volumen der Mischkammer (47) anpassbar ist, zur Einstellung der Menge des in die Mischkammer (47) über die Dosiereinheit (41) zugeführten zusätzlichen Mittels.

10. System nach einem der Ansprüche 1 bis 9, wobei die Verarbeitungseinrichtung (1) eine Putzmaschine, vorzugsweise eine Feinputzmaschine ist.

11. System nach einem der Ansprüche 1 bis 9, wobei die erste Zuführöffnung (3) ein Anschlußstück für zumindest ein Silo oder ein Einschütttrichter zur manuellen Zugabe des ersten Ausgangsstoffes ist.

12. System nach einem der Ansprüche 1 bis 9, wobei die zweite Zuführvorrichtung (9) ein Wasseranschluß ist.

13. System nach einem der Ansprüche 1 bis 9, wobei der der Verarbeitungseinrichtung (1) zugeführte riesel- bzw. schüttfähige erste Ausgangsstoff aus einer Gruppe bestehend aus Putzen, insbesondere Feinputzen, Mörtel, Zement, Estrich, Ausgleichsmasse, Gipsputz und dergleichen ausgewählt ist.

14. System nach Anspruch 13, wobei der Putz ein Kalkzementputz ist, bestehend aus Luftkalk, Zement und hochwertigem Kalkbrechsand.

15. System nach Anspruch 13, wobei der Putz ein Kalkzement-Leichtputz ist, bestehend aus Luftkalk, Zement, hochwertigem Kalkbrechsand, Leichtzuschlag und Faserzusatz.

16. System nach einem der Ansprüche 1 bis 9, wobei der der Verarbeitungseinrichtung zugeführte zweite Ausgangsstoff Wasser ist.

17. System nach einem der Ansprüche 1 bis 9, und wobei das dem zweiten Ausgangsstoff durch die Zugabeeinrichtung (17) beigemengte, zusätzliche Mittel ein Abbindebeschleuniger und/oder ein Abbindeverzögerer ist.

18. System nach Anspruch 17, wobei die Menge des dem zweiten Ausgangsstoff zugegebenen Abbindebeschleunigers und/oder ein Abbindeverzögerers in Abhängigkeit von einer gewünschten Abbindezeit des erstarrungsfähigen Baumaterials frei einstellbar ist.

19. System nach einem der Ansprüche 17 oder 18, wobei das dem zweiten Ausgangsstoff durch die Zugabeeinrichtung (17) beigemengte, zusätzliche Mittel ferner eine Farbstofflösung oder Farbstoffsuspension umfasst.

20. System nach einem der Ansprüche 1 bis 9, wobei die Speichereinrichtung (29) ein Kanister oder dergleichen ist.

21. System nach einem der Ansprüche 8 bis 20, wobei die Skala (51) einen die Abbindezeit darstellenden Wert anzeigt.

22. Zugabeeinrichtung (17), insbesondere in Form einer hydraulisch betriebenen Dosierkolbenpumpe, zur Verwendung in einem System nach einem der Ansprüche 1 bis 21, wobei die Zugabeeinrichtung (17) aufweist:
eine erste Anschlußöffnung (19), zum Anschluß einer Zufuhrleitung (27) von einem Wasseranschluß,
eine zweite Anschlußöffnung (21), zum Anschluß einer Abführleitung (25) zu einer Verarbeitungseinrichtung (1),
eine Zufuhrleitung (23) zum Zuführen eines zusätzlichen Mittels aus einer Speichereinrichtung (29), sowie
ein Gehäuse (37) mit einer darin angeordneten Antriebseinheit (39) und einer Dosiereinheit (41),
wobei
die erste Anschlußöffnung (19), die zweite Anschlußöffnung (21) und die Zufuhrleitung (23) an dem Gehäuse ausgebildet sind,
die Antriebseinheit (39) einen Antriebskolben (43) aufweist, der durch den über die erste Anschlußöffnung (19) zugeführten zweiten Ausgangsstoff antreibbar ist,
die Dosiereinheit (41) einen Dosierkolben (45) aufweist, der durch eine Bewegung des Antriebskolbens (43) der Antriebseinheit (39) antreibbar ist, zur Erzeugung eines Unterdrucks und zur Zufuhr des zusätzlichen Mittels in eine in der Zugabeeinrichtung (17) ausgebildeten Mischkammer (47),
das in der Mischkammer (47) erzeugte Gemisch aus dem zweiten Ausgangsstoff und dem zusätzlichen Mittel über die zweite Anschlußöffnung (21) aus der Zugabeeinrichtung (17) der Verarbeitungseinrichtung (1) zugeführt wird, und
die Menge des in die Mischkammer (47) über die Dosiereinheit (41) zugeführten zusätzlichen Mittels über einen Regler (31) derart einstellbar ist, dass diese proportional zur Menge des zugeführten zweiten Ausgangsstoffes ist.

23. Zugabeeinrichtung (17) nach Anspruch 22, wobei das zusätzliche Mittel ein Abbindebeschleuniger und/oder ein Abbindeverzögerer ist und die Menge des zugeführten Abbindebeschleunigers und/oder ein Abbindeverzögerers in Abhängigkeit von einer gewünschten Abbindezeit des erstarrungsfähigen Baumaterials frei einstellbar ist.

24. Zugabeeinrichtung (17) nach Anspruch 22 oder 23, wobei der Regler (31) einen Stellring (49) sowie eine Skala (51) aufweist und der Stellring (49) eine Kerbe (53) aufweist, zur Auswahl eines gewünschten Wertes auf der Skala (51).

25. Zugabeeinrichtung (17) nach einem der Ansprüche 22 bis 24, wobei die Skala (51) einen eine Abbindezeit eines erstarrungsfähigen Baumaterials darstellenden Wert anzeigt.
